# EUROPEAN PATENT SPECIFICATION

(11) **EP 2 511 888 B1**
(45) Date of publication and mention of the grant of the patent: **26.12.2018**
(21) Application number: 12164173.2
(22) Date of filing: 13.04.2012
(51) Int. Cl.: G08B 17/00, G08B 17/12, G06Q 10/06

(54) **Fire management system**
Feuerhandhabungssystem
Système de gestion d'incendie

(30) Priority: 14.04.2011 US 201113086521
(43) Date of publication of application: 17.10.2012
(73) Proprietor: The Boeing Company, Chicago, IL 60606-1596 (US)
(72) Inventor: Vian, John L., Renton, WA Washington 98056-1553 (US); Saad, Emad W., Renton, WA Washington 98059-4133 (US)
(74) Representative: Howson, Richard Giles Bentham

(56) References cited:
- WO-A1-97/35433
- US-A1- 2002 026 431

## Description

### BACKGROUND INFORMATION

### Field:

The present disclosure relates generally to a fire management systems, and in particular, to fire management systems for detecting and managing fires.

### Background:

Fires may occur in various geographic areas. For example, fires may occur in both urban areas and in rural areas. Fires that occur in the countryside or in wilderness areas can be problematic. This type of fire also may be referred to as a wildfire, a brush fire, a bush fire, a forest fire, a grass fire, or some other type of fire. A wildfire may be extensive in size and may spread quickly, depending on wind and moisture conditions at the time of the fire. Further, this type of fire also may change direction unexpectedly and/or jump across gaps, such as roads, rivers, and/or fire breaks.

Wildfires may be started in response to natural causes, such as, for example, without limitation, lightning, volcanic eruption, sparks from rock falls, spontaneous combustion, and/or other various sources. Fires also may have human and manmade causes, such as, for example, without limitation, arson, discarded cigarettes, sparks from equipment, power line arcs, and/or other types of manmade and human sources.

With respect to these and other types of fires, fighting or containing these and other types of fires often relies on early detection of the fires. Currently, fires may be identified using public hotlines, fire lookouts and towers, ground and aerial patrols, and/or other types of detection. Identifying fires through human observation may be limited by operator fatigue, time of day, time of year, and/or geographic location.

The use of satellites and sensors has increased in identifying fires in forests and other wilderness areas. Using satellites and sensors may involve using satellite data, aerial imagery, sensor data, and/or information collected by human personnel to identify fires.

For example, wireless sensors may be placed in different locations in a forest and/or in other areas of interest. The sensors may be placed on the ground, in trees, on towers, and/or in other suitable locations. These sensors may detect parameters, such as, for example, without limitation, temperature, carbon dioxide, humidity, and smoke. These types of sensors may be battery powered, solar powered, or rechargeable using currents running through trees or other plant matter.

Although these sensors are useful in detecting fires, placing a sufficient amount of sensors in an area may be time consuming and expensive with large areas to be monitored. Further, the sensors may require maintenance. As a result, the use of sensors may be more expensive and more difficult to maintain than desired.

Satellites may be used to provide information about infrared radiation that may be emitted by fires. Although satellites are useful, these types of satellites may have a short window of observation. Additionally, cloud cover and image resolution also may limit the effectiveness of these types of systems. Use of aircraft with sensors configured to detect fires also provides an additional method for detecting fires. Aircraft, however, may be limited in range and/or conditions in which they are capable of detecting fires.

Therefore, it would be advantageous to have a method and apparatus that takes into account at least some of the issues discussed above, as well as possibly other issues.

US2002/0026431A1 relates to a method for detecting fires and reacting thereto. A stationary, earth orbit satellite, drone aircrafts or piloted aircraft contains infrared detectors and optical means for detecting fires. A computer in the satellite, drone or piloted aircraft and/or on the ground analyzes image signals of the areas being monitored and, upon detecting infrared radiation of varying intensity and shape, indicative that a fire has started, generates signals which are indicative of the coordinate locations of the fire, the extent of the fire, the shape of the area(s) burning, the direction of movement of the fires, the speed(s) of the flame fronts, smoke condition, intensity of the fire, fire ball location(s), etc.

### SUMMARY

According to claim 1, a fire management system comprises a control system. The control system is configured to receive fire-related information from at least a portion of a heterogeneous group of vehicles and a heterogeneous group of data sources. The control system is further configured to analyze the fire-related information to generate a result. The control system is further configured to coordinate, as a swarm, an operation of the heterogeneous group of vehicles using the result to perform a number of common tasks or operations and/or achieve a common goal, wherein the heterogeneous group of data sources include autonomous sensor units, wherein coordinating as a swarm comprises the fire management module running on the control system sending commands to each of the vehicles within the swarm, wherein operating as a swarm comprises the heterogeneous group of vehicles having a collective behavior with respect to each other and an environment around the swarm of vehicles. The fire management module in the control system is further configured to run a simulation to generate the result in a form of a progress predicted for a fire and wherein in being configured to coordinate the operation of the heterogeneous group of vehicles using the result, the control system (200) is configured to send directions to coordinate movement of the swarm based on the progress predicted for the fire, including ordering a change of a current direction of travel for the swarm to a new direction along a new path predicted for the fire.

According to claim 12, a method for managing fires is provided. Fire-related information is received from a heterogeneous group of vehicles and a heterogeneous group of data sources, wherein the heterogeneous group of data sources include autonomous sensor units, wherein the autonomous sensor units include autonomous smart data origination components (ASDOC), aeronautical source collection and service system (ASCASS), and four dimensional time-variant multi-modal information system (4DTMIS). The fire-related information is analyzed to generate a result. An operation of the heterogeneous group of vehicles is coordinated, as a swarm, using the result to perform a number of common tasks or operations and/or achieve a common goal, wherein coordinating as a swarm comprises sending commands to each of the vehicles within the swarm, wherein operating as a swarm comprises the heterogeneous group of vehicles having a collective behavior with respect to each other and an environment around the swarm of vehicles. The method further comprises running a simulation to generate the result in a form of a progress predicted for a fire. The method further comprises sending directions to coordinate movement of the swarm based on the progress predicted for the fire, including ordering a change of a current direction of travel for the swarm to a new direction along a new path predicted for the fire.

Preferred embodiments are set out in the dependent claims.

The features, functions, and advantages can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the advantageous embodiments are set forth in the appended claims. The advantageous embodiments, however, as well as a preferred mode of use, further objectives, and advantages thereof, will best be understood by reference to the following detailed description of an advantageous embodiment of the present disclosure when read in conjunction with the accompanying drawings, wherein:
**Figure 1** is an illustration of a fire management environment in accordance with an advantageous embodiment;
**Figure 2** is an illustration of a block diagram for a fire management system in accordance with an advantageous embodiment;
**Figure 3** is an illustration of different types of assets in accordance with an advantageous embodiment;
**Figure 4** is an illustration of different types of fire-related information in accordance with an advantageous embodiment;
**Figure 5** is an illustration of an unmanned aerial vehicle flying towards a fire in accordance with an advantageous embodiment;
**Figure 6** is an illustration of unmanned aerial vehicles monitoring a fire in a forest in accordance with an advantageous embodiment;
**Figure 7** is an illustration of a vehicle performing containment operations for a fire in accordance with an advantageous embodiment;
**Figure 8** is an illustration of an aerial vehicle monitoring unit monitoring a location at which a fire has been contained in accordance with an advantageous embodiment;
**Figure 9** is an illustration of a flowchart of a process for managing fires in accordance with an advantageous embodiment; and
**Figure 10** is an illustration of a data processing system in accordance with an advantageous embodiment.

### DETAILED DESCRIPTION

In these illustrative examples, the different advantageous embodiments recognize and take into account that currently, the detection of fires are not planned in a manner that may be as efficient as desired. For example, the different advantageous embodiments recognize and take into account that current detection methods rely on sensors in towers or fire towers and/or human personnel spotting the presence of fires and other sources.

The different advantageous embodiments also recognize and take into account that currently, human operators receive this information and use it to determine whether fires are present and whether to request that different fire containment assets perform operations to contain the fires. The containment of fires includes preventing the fires from spreading and/or putting out the fires in these illustrative examples.

Further, the different advantageous embodiments recognize and take into account that the coordination of assets in containing fires may not be as organized as desired. For example, the different advantageous embodiments recognize and take into account that oftentimes, personnel in units on the ground perform operations to contain a fire independently of each other or independently of aerial units that may be present.

The different advantageous embodiments recognize and take into account that the use of a human operator to coordinate these operations may be difficult given the unpredictability that may occur with the progress of a fire. For example, currently, a human operator may be unable to obtain information related to a fire as quickly as desired during the fire. Currently-available systems for obtaining fire-related information may have limitations in certain situations, such as, for example, in darkness, in smoke, near mountainous terrain, in wind turbulence, and/or other types of situations. Further, using these types of systems near locations in which a fire is occurring may increase the risk to the human operators using these systems.

Thus, the different advantageous embodiments provide a fire management system that may be used to detect fires, contain fires, or perform a combination of the two. In an advantageous embodiment, a fire management system comprises a control system. The control system is configured to receive fire-related information from at least a first portion of a plurality of assets and analyze the fire-related information to generate a result. The control system is configured to coordinate an operation of a second portion of the plurality of assets using the result.

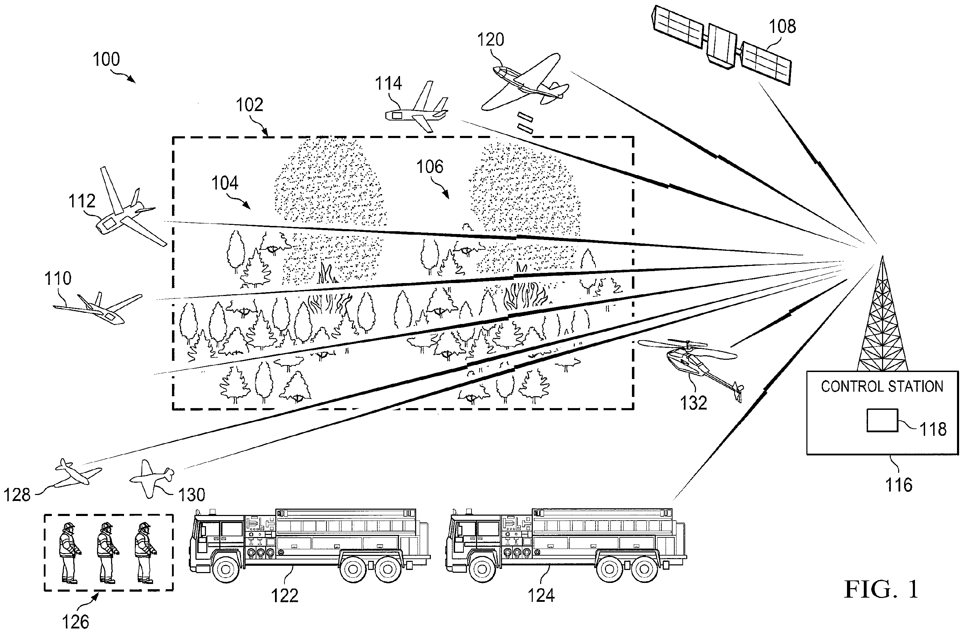

With reference now to **Figure 1****,** an illustration of a fire management environment is depicted in accordance with an advantageous embodiment. Fire management environment **100** includes various assets that monitor locations, such as location **102,** for fires, such as fire **104** and fire **106.**

In these illustrative examples, satellite **108,** unmanned aerial vehicle **110,** unmanned aerial vehicle **112,** and unmanned aerial vehicle **114** perform surveillance on location **102,** as well as other locations. The surveillance may detect the presence of a fire. For example, when the presence of fire **104** and fire **106** is detected, satellite **108,** unmanned aerial vehicle **110,** unmanned aerial vehicle **112,** and unmanned aerial vehicle **114** use onboard sensors to generate information about fire **104** and fire **106,** as well as about location **102.**

This information is sent to control station **116.** This information may be sent over wireless communications links as fast as can be sent by satellite **108,** unmanned aerial vehicle **110,** and unmanned aerial vehicle **112.** When the information is sent as fast as possible without any intentional delays, this information is considered to be sent in real time and is referred to as real time information.

In these illustrative examples, fire management system **118** is located at control station **116.** Fire management system **118** collects the information sent by satellite **108,** unmanned aerial vehicle **110,** unmanned aerial vehicle **112,** and unmanned aerial vehicle **114.** Fire management system **118** uses this information to predict the progress of fire **104** and fire **106.**

In these illustrative examples, fire **104** and fire **106** may spread in different directions and at different rates, depending on environmental conditions. For example, moisture, vegetation, temperature, wind speed, wind direction, and/or other factors may affect the rate and/or extent to which fire **104** and fire **106** spread.

Fire management system **118** also may direct unmanned aerial vehicle **110,** unmanned aerial vehicle **112,** and unmanned aerial vehicle **114** in a coordinated fashion to obtain additional information about fire **104** and fire **106.**

Additionally, fire management system **118** may direct assets, such as aerial fire containment unit **120** to location **102** to perform containment operations for fire **104** and fire **106.** Fire management system **118** also may direct assets, such as ground unit **122,** ground unit **124,** personnel **126,** aerial support unit **128,** and aerial support unit **130** to location **102** to perform containment operations for fire **104** and fire **106.**

In these illustrative examples, personnel **126** operate ground unit **122** and ground unit **124.** As depicted, fire management system **118** may coordinate the operation of aerial support unit **128** and aerial support unit **130** in a manner that provides information to personnel **126** regarding the current conditions of fire **104** and fire **106.**

For example, aerial support unit **128** and aerial support unit **130** fly at lower altitudes as compared to satellite **108,** unmanned aerial vehicle **110,** unmanned aerial vehicle **112,** and unmanned aerial vehicle **114.** Information about fire **104** and fire **106** may be obtained at these lower altitudes and may not be obtained at the higher altitudes at which satellite **108** orbits and unmanned aerial vehicle **110,** unmanned aerial vehicle **112,** and unmanned aerial vehicle **114** operate.

Aerial support unit **128** and aerial support unit **130** may be directly and manually controlled by personnel **126.** Video feed from aerial support unit **128** and aerial support unit **130** may help the human operators control these vehicles. These different assets, operating in a support role, may provide video and/or other information used to identify the size and direction of fire **104** and fire **106.** Additionally, fire monitoring unit **132** may provide information to fire management system **118** about the status of fire **104** and fire **106** during the containment operations performed by the different assets and/or after containment of fire **104** and fire **106.**

In this illustrative example, the operation of the different assets, both manned and unmanned, are coordinated by fire management system **118.** When these assets are coordinated in this fashion, the assets may be referred to as a swarm.

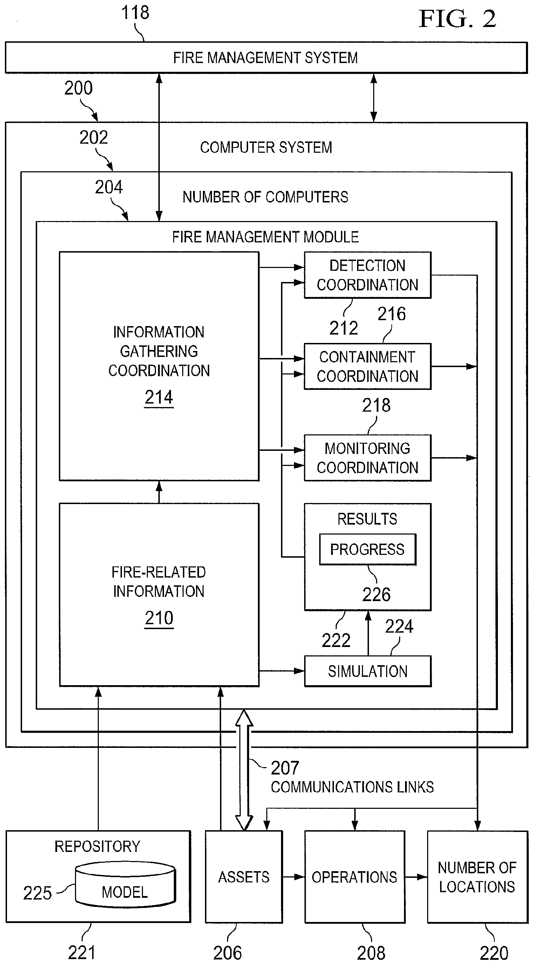

With reference now to **Figure 2****,** an illustration of a block diagram for a fire management system is depicted in accordance with an advantageous embodiment. In this illustrative example, fire management system **118** from **Figure 1** is illustrated in a block diagram to depict and describe different features that may be present in fire management system **118.**

Fire management system **118** may be implemented in part or all of control system **200** in **Figure 2****.** Control system **200** comprises number of computers **202** that may be in communication with each other. A number, as used herein with reference to items, means one or more items. For example, "number of computers **202**" means one or more computers.

As depicted, fire management module **204** runs on control system **200** as part of fire management system **118.** Fire management module **204** is software in these illustrative examples. Fire management module **204** is in communication with assets **206** in these illustrative examples. Assets **206** may include, for example, without limitation, a person, a vehicle, a machine, a sensor system, a computer, a satellite system, a ground station, a control tower, and/or other suitable types of objects.

As one illustrative example, assets **206** may include, for example, satellite **108,** unmanned aerial vehicle **110,** unmanned aerial vehicle **112,** unmanned aerial vehicle **114,** aerial fire containment unit **120,** ground unit **122,** ground unit **124,** personnel **126,** aerial support unit **128,** and/or aerial support unit **130** in **Figure 1****.** Of course, depending on the implementation, assets **206** may include other types of assets.

In these illustrative examples, number of computers **202** for control system **200** may be located in one or more of assets **206,** at a number of control stations, and/or in other suitable locations.

As depicted in these examples, fire management module **204** runs in control system **200** and communicates with assets **206** using communications links **207.** Communications links **207** may include one or more wireless communications links, wired communications links, and/or other suitable types of communications links.

Fire management module **204** is configured to coordinate operations **208** performed by assets **206.** Coordinating involves directing assets **206** in a manner that allows for a more-efficient use of assets **206** to perform a mission, task, process, and/or other operation. Coordinating assets **206** may reduce redundancy or overlap in the operation of assets **206** when redundancy or overlap is not desired. Coordinating may include directing assets **206** by, for example, without limitation, sending at least one of a command, a message, a goal, a mission, a task, data, and other information that directs and/or gives guidance in performing operations **208.** The coordination may occur in a manner that operations **208** are performed such that some or all of assets **206** may work together as a single group or in multiple groups.

As used herein, the phrase "at least one of", when used with a list of items, means that different combinations of one or more of the listed items may be used and only one of each item in the list may be needed. For example, "at least one of item A, item B, and item C" may include, for example, without limitation, item A or item A and item B. This example also may include item A, item B, and item C, or item B and item C. In other examples, "at least one of" may be, for example, without limitation, two of item A, one of item B, and 10 of item C; four of item B and seven of item C; and other suitable combinations.

For example, fire management module **204** may coordinate assets **206.** Operations **208** may detect presence of a fire, gather fire-related information **210** about any fire detected, contain any fire detected, and/or monitor the status of any fire detected during and/or after containment of the fire. In these illustrative examples, fire management module **204** uses fire-related information **210** to coordinate operations **208** performed by assets **206.**

For example, in these illustrative examples, fire management module **204** may receive fire-related information **210** from at least a first portion of assets **206.** Fire management module **204** may use this information to coordinate operations **208** performed by a second portion of assets **206.** This second portion of assets **206** may include one or more of the first portion of assets **206** and/or one or more different assets within assets **206.**

In these illustrative examples, fire-related information **210** may include any information about a fire, conditions that may have a potential to allow a fire to start and/or spread, a location at which the fire is present, a location surrounding a fire, and/or other suitable information that may be used to identify a potential fire condition, detect a fire, contain a fire, and/or monitor the status of a fire. In some cases, fire-related information **210** may include information that may be used to detect the presence of one or more fires.

Fire management module **204** may integrate fire-related information **210** gathered from the different assets in assets **206** to identify operations **208** that coordinate assets **206.** Coordination of assets **206** includes detection coordination **212,** information gathering coordination **214,** containment coordination **216,** and/or monitoring coordination **218** of assets **206,** in these illustrative examples.

Detection coordination **212** of assets **206** includes coordinating one or more of assets **206** such that any presence of a fire may be detected. For example, one or more of assets **206** may operate in a manner that provides better coverage, more coverage, and/or longer periods of coverage to detect a presence of a fire, as opposed to one or more of assets **206** working independently of each other.

In particular, detection coordination **212** of assets **206** includes coordinating any number of assets **206** that may have the capability to detect the presence of a fire or generate information that may be used to identify the presence of a fire to perform operations such that any fire in number of locations **220** may be detected. As an example, each of assets **206** used to detect a presence of a fire may have different routes such that an area of interest is covered in a manner desired to detect the presence of a fire.

In these illustrative examples, number of locations **220** may include any location that has been selected as an area in which a fire has a potential to occur, currently occurring, has previously occurred, and/or any other suitable location of interest with respect to fires.

In one advantageous embodiment, detection coordination **212** of assets **206** may include coordinating a group of unmanned aerial vehicles to fly over number of locations **220** in which the potential for a fire to occur has been identified. A group of objects, as used herein, means two or more objects. "A group of unmanned aerial vehicles" is two or more of unmanned aerial vehicles. The group of unmanned aerial vehicles may include, for example, unmanned aerial vehicle **110,** unmanned aerial vehicle **112,** and/or unmanned aerial vehicle **114** in **Figure** 1. This coordination of the group of unmanned aerial vehicles may include selecting routes and times for the group of unmanned aerial vehicles that avoid overlapping between the routes and times in a manner that provides a desired level of coverage for number of locations **220.**

In another advantageous embodiment, detection coordination **212** of assets **206** may include controlling a plurality of sensor units placed in number of locations **220** to monitor for a presence of smoke levels that indicate the presence of a fire. Of course, in other illustrative examples, detection coordination **212** may include coordinating other types of assets **206** to detect the presence of a fire in number of locations **220.**

In these illustrative examples, information gathering coordination **214** of assets **206** may include coordinating any number of assets **206** to gather fire-related information **210.** For example, information gathering coordination **214** may include coordinating assets **206** to gather fire-related information **210** for one or more fires that have been detected in number of locations **220.**

Further, in some cases, fire-related information **210** may be used by fire management module **204** to detect the presence of a fire prior to the fire being identified. When fire management module **204** uses information gathering coordination **214** of assets **206** to detect a fire, information gathering coordination **214** may be considered a part of detection coordination **212.** In other words, detection coordination **212** of assets **206** may include information gathering coordination **214** of assets **206** such that fire management module **204** may detect the presence of a fire.

In these illustrative examples, containment coordination **216** of assets **206** includes coordinating operations **208** performed by any number of assets **206** to contain any fire that may be detected. For example, in response to the detection of a fire, fire management module **204** performs containment coordination **216** of assets **206** to contain the fire.

In one advantageous embodiment, containment coordination **216** includes coordinating an aerial fire containment unit, such as aerial fire containment unit **120** in **Figure 1****,** to perform containment operations for a fire that has been detected. These containment operations may include, for example, releasing chemicals at the location of the fire to put the fire out and/or stop the fire from spreading.

In these illustrative examples, containment coordination **216** of assets **206** may also include information gathering coordination **214** of assets **206.** For example, containment coordination **216** may include coordinating assets **206** to contain a fire using fire-related information **210** gathered by performing information gathering coordination **214** of assets **206.**

As one specific example, containment coordination **216** of assets **206** may include directing a number of unmanned ground vehicles and/or manned ground units to move in a direction in which a fire has been predicted to spread using fire-related information **210.** For example, fire management module **204** may identify a predicted path for a fire based on fire-related information **210.** Fire management module **204** performs containment coordination **216** of the unmanned ground vehicles and/or manned ground units to move in or change directions to move in a direction along the path predicted for the fire.

As another illustrative example, assets **206** may be coordinated to change coverage or a range of coverage of a fire based on a predicted expansion of a fire.

Monitoring coordination **218** of assets **206** includes coordinating any number of assets **206** to monitor the status of a fire that has been detected prior to, during, and/or after containment operations have been performed for the fire. For example, monitoring coordination **218** may include coordinating personnel on the ground, such as personnel **126** in **Figure 1****,** and a group of ground units to monitor the status of the fire.

Of course, in these illustrative examples, monitoring coordination **218** of assets **206** may also include information gathering coordination **214** of assets **206.** In other words, fire management module **204** may perform monitoring coordination **218** of assets **206** using fire-related information **210** gathered from information gathering coordination **214** of assets **206.**

In these advantageous embodiments, one or more of the different types of coordination of assets **206** may be performed using different groups of assets **206** and/or a same group of assets **206.**

In the processes of detection coordination **212,** containment coordination **216,** and monitoring coordination **218,** fire management module **204** assigns assets **206** to perform tasks based on the capabilities of assets **206.** For example, an unmanned aerial vehicle carrying an infrared sensor can be sent for fire monitoring, while a manned helicopter can be sent for fire containment. These vehicles communicate their current capabilities to fire management module **204,** which in turn may use this information in coordinating these vehicles and assigning tasks to be performed by these vehicles.

In these illustrative examples, fire management module **204** may use fire-related information **210** to coordinate assets **206** by analyzing fire-related information **210.** In particular, fire management module **204** may analyze fire-related information **210** and generate results **222.** Results **222** may then be used in coordinating assets **206.**

Results **222** may take various forms. For example, results **222** may include at least one of a map identifying a current location of a fire, a prediction of the progress of a fire, a plan for containing the fire, an identification of areas that need a warning about the fire, an identification of an area for evacuation, statistics about the fire, and/or other suitable types of results.

In these illustrative examples, fire management module **204** in control system **200** may run simulation **224** to generate results **222.** Simulation **224** may be, for example, a simulation of a fire that has been detected. In these illustrative examples, running simulation **224** may generate results **222** in the form of progress **226** predicted for a fire. Progress **226** may include a predicted path for the fire, a predicted expansion or spread of the fire, a predicted amount of smoke generated by the fire, a predicted level of toxic fumes generated by the fire, and/or other predicted information relating to the fire.

Simulation **224** is run based on fire-related information **210** obtained from assets **206** in the illustrative examples. Further, in some illustrative examples, simulation **224** may also be run based on fire-related information **210** obtained from repository **221.**

Repository **221** may be located in a number of storage devices external to control system **200** and/or in control system **200.** In some illustrative examples, repository **221** may be considered one of assets **206.**

Repository **221** comprises at least one of, for example, without limitation, a number of databases, data structures, files, spreadsheets, logs, charts, maps, images, video streams, airport and landing area data, information about fire suppressant stockpiles, information about lakes, rivers, and other water source locations, and/or other sources of data. In these illustrative examples, repository **221** may include model **225.** Model **225** may include, for example, data about fires that have previously occurred and been contained, predicted behaviors for fires, historical data about fires, geographic data related to prior fires, and/or other suitable information that may be useful in running simulation **224** to predict progress **226** of a fire.

In these illustrative examples, fire management module **204** may use results **222** to perform containment coordination **216** and/or monitoring coordination **218** of a fire. Further, while performing containment coordination **216** and monitoring coordination **218** of a fire, fire management module **204** may continue to coordinate assets **206** to gather fire-related information **210.**

The different advantageous embodiments provide a system for managing fires using fire-related information **210** gathered from different types of assets **206** and integrated to form results **222** that may be used in managing the fires. The coordination of assets **206** may be performed by fire management module **204** more efficiently as compared to each one of assets **206** being coordinated without the combined fire-related information **210** obtained from all of assets **206.**

The illustration of fire management module **204** in control system **200** in **Figure 2** is not meant to imply physical or architectural limitations to the manner in which an advantageous embodiment may be implemented. Other components in addition to and/or in place of the ones illustrated may be used. Some components may be unnecessary. Also, the blocks are presented to illustrate some functional components. One or more of these blocks may be combined and/or divided into different blocks when implemented in an advantageous embodiment.

For example, in some illustrative examples, fire management system **118** may be located in control system **200.** In other illustrative examples, fire management module **204** may be configured to coordinate assets **206** using other types of coordination other than the ones described above.

Further, in some illustrative examples, fire-related information **210** may be sent to a human operator at control system **200** for decision-making support to fire management module **204.** In other words, the human operator may make decisions about coordinating assets **206** for managing a fire based on fire-related information **210.**

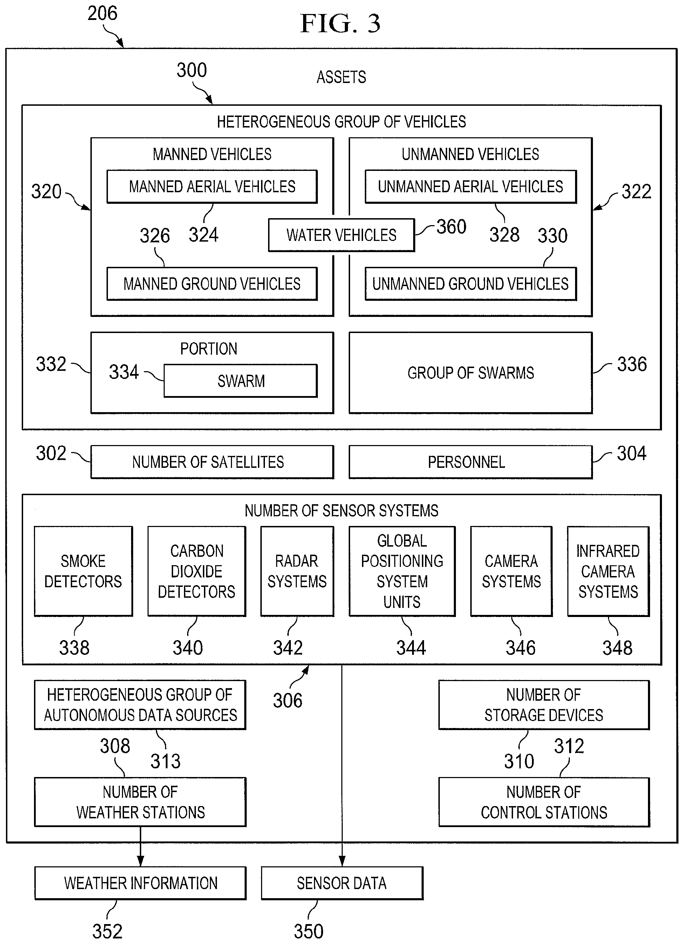

With reference now to **Figure 3****,** an illustration of different types of assets is depicted in accordance with an advantageous embodiment. In this illustrative example, different types of assets that may be included in assets **206** from **Figure 2** are shown.

As depicted, assets **206** include at least one of heterogeneous group of vehicles **300,** number of satellites **302,** personnel **304,** number of sensor systems **306,** number of weather stations **308,** number of storage devices **310,** number of control stations **312,** heterogeneous group of autonomous data sources **313,** and other suitable types of assets.

In these illustrative examples, heterogeneous group of vehicles **300** is a group of vehicles in which at least two of the vehicles have a different configuration, different capabilities, are of a different type, and/or are different in some other manner. Heterogeneous group of vehicles **300** includes at least two vehicles selected from at least one of manned vehicles **320** and unmanned vehicles **322.** Manned vehicles **320** may include manned aerial vehicles **324** and/or manned ground vehicles **326.** Unmanned vehicles **322** may include unmanned aerial vehicles **328** and/or unmanned ground vehicles **330.**

Unmanned aerial vehicles **328** may be partially and/or fully autonomous in these examples. Some examples of types of unmanned aerial vehicles **328** include, for example, the Scaneagle, developed by Insitu of the Boeing Company; the Wasp™, manufactured by Aeroenvironment, Incorporated; the Camcopter® S-100, developed by the Sheibel Corporation; and/or other suitable types of unmanned aerial vehicles.

Further, heterogeneous group of vehicles **300** may include other types of vehicles, such as, for example, without limitation, jet airplanes, helicopters, ground units, fire engines, space vehicles, aerial support units, aerial monitoring units, and/or other suitable types of vehicles.

When portion **332** of heterogeneous group of vehicles **300** are coordinated by fire management module **204** in **Figure 2** to perform a number of common tasks or operations and/or achieve a common goal, portion **332** of heterogeneous group of vehicles **300** may form swarm **334.** Portion **332** may be some or all of heterogeneous group of vehicles **300.** In these different illustrative examples, a swarm of vehicles may operate collectively. In other words, a swarm may have a collective behavior with respect to each other and the environment around the swarm of vehicles.

In some illustrative examples, fire management module **204** may coordinate swarm **334** by sending commands to each of the vehicles within swarm **334.** When swarm **334** includes portion **332** of manned vehicles **320,** these commands, and/or other suitable information, may be displayed to operators of portion **332** of manned vehicles **320.** When swarm **334** includes portion **332** of unmanned vehicles **322,** the commands may be displayed to the operators controlling portion **332** of unmanned vehicles **322** remotely and/or sent to control systems on board portion **332** of unmanned aerial vehicles **328.**

In one advantageous embodiment, swarm **334** comprises unmanned aerial vehicles **328** and unmanned ground vehicles **330.** With this implementation, fire management module **204** can coordinate operations performed by swarm **334** such that all of the vehicles in swarm **334** move collectively in a direction along a path selected by fire management module **204.**

For example, if a path of expansion for a fire is predicted to change based on changing wind speed and/or direction provided in fire-related information **210** in **Figure 2****,** fire management module **204** may direct swarm **334** to change a current direction of travel for swarm **334** to a new direction along the new path predicted for the fire.

In other illustrative examples, vehicles in swarm **334** may be coordinated to move in different directions around a location of a fire to perform a common goal or task. For example, in some cases, different vehicles in swarm **334** may be coordinated to monitor different areas near the location of a fire to monitor for air quality and/or provide support to other vehicles performing containment operations.

In some illustrative examples, heterogeneous group of vehicles **300** may be coordinated such that heterogeneous group of vehicles **300** form group of swarms **336.** In other words, fire management module **204** may coordinate more than one swarm to perform various operations to manage a fire.

Additionally, in some cases, fire management module **204** may analyze fire-related information **210** to identify an undesired condition resulting from a fire for an operator at a location and direct heterogeneous group of vehicles **300** to obtain information about the fire at the location. In particular, heterogeneous group of vehicles **300** may be directed to obtain information relating to at least one of the safety of the operator at the location and containment of the fire at the location.

In these depicted examples, number of satellites **302** may be configured to provide satellite imagery of a location in which a fire has been detected. Further, satellite imagery of this location and the area surrounding this location may be used in predicting the progress of a fire.

Assets **206** in **Figure 2** in the form of personnel **304** may be coordinated to perform various operations by fire management module **204.** For example, one or more persons in personnel **304** may be coordinated to operate one or more vehicles in heterogeneous group of vehicles **300.** Further, information may be displayed to personnel **304** identifying the operations that are to be performed by personnel **304.** Communications with personnel **304** may include using, for example, voice, radios, video, and/or other types of media. For example, personnel **304** may communicate with each other and/or other human operators by exchanging voice communications using portable computers.

Number of sensor systems **306** may include at least one of smoke detectors **338,** carbon dioxide detectors **340,** radar systems **342,** global positioning system units **344,** camera systems **346,** infrared camera systems **348,** and/or other suitable types of sensor systems. Number of sensor systems **306** is configured to generate sensor data **350** that may form part of fire-related information **210** in **Figure 2****.** Number of sensor systems **306** may be, for example, fixed, moving, mounted on the ground, airborne, or mounted on ground vehicles.

Further, number of weather stations **308** may include any number of weather stations and/or weather devices configured to provide weather information **352** for the areas being monitored for fires and/or the areas in which fires have been detected. Weather information **352** forms part of fire-related information **210** in **Figure 2****.** Fire management module **204** may use weather information **352** to identify areas in which a fire may potentially occur, predict a path of expansion for a fire, predict whether additional fires may start in response to a fire that has been detected, and/or make other types of determinations and/or predictions.

In this illustrative example, fire management module **204** may also obtain fire-related information **210** from number of storage devices **310.** Number of storage devices **310** may include any type of storage device storing fire-related information **210.** For example, number of storage devices **310** may include a repository, such as repository **221** in **Figure 2****,** a number of databases, a number of servers, a number of hard drives, and/or other suitable types of storage devices.

Number of storage devices **310** may provide fire-related information **210** in the form of, for example, geographical information, maps, charts, historical data, statistical data, predictive algorithms, and/or other suitable information. In some illustrative examples, number of storage devices **310** may include operating parameters, constraints, schematics, and/or other suitable information for any number of assets **206** that may be used by fire management module **204** to coordinate assets **206.**

Additionally, number of control stations **312** may be considered assets **206** when number of control stations **312** is configured to obtain information from other assets within assets **206** and provide this information to fire management module **204.** In one advantageous embodiment, number of control stations **312** may be a ground station or an air traffic control tower configured to exchange information with manned aerial vehicles **324.** In this embodiment, fire management module **204** may then communicate with manned aerial vehicles **324** through number of control stations **312.**

Additionally, in this illustrative example, heterogeneous group of autonomous data sources **313** may include a group of heterogeneous data sources that is configured to generate and send data to fire management module **204** in **Figure 2****.** For example, heterogeneous group of autonomous data sources **313** may include autonomous sensor units. These autonomous sensor units may take the form of, for example, autonomous smart data origination components (ASDOC) and/or other suitable types of autonomous data sources. Further, heterogeneous group of autonomous data sources **313** may also include, for example, aeronautical source collection and service system (ASCASS), four dimensional time-variant multi-modal information system (4DTMIS), and other types of systems.

In different advantageous embodiments, a portion of control system **200** in **Figure** 2 may be present in a portion of these different types of assets **206.** As used herein, when possible, a portion may be some or all of a system, group, or collection of items. With this type of implementation, this portion of these different types of assets **206** may include applications, artificial intelligence, neural-networks, and/or other suitable software for fire management module **204** for coordination of this portion of assets **206.**

The illustration of assets **206** in **Figure 3** is not meant to imply physical or architectural limitations to the manner in which an advantageous embodiment may be implemented. Other components in addition to and/or in place of the ones illustrated may be used. Some components may be unnecessary. Also, the blocks are presented to illustrate some functional components. One or more of these blocks may be combined and/or divided into different blocks when implemented in an advantageous embodiment.

For example, in other illustrative examples, assets **206** may include lightning strike sensors, amphibious aircraft, fire fighting helicopters, object detection systems, radar systems, surveillance systems, rendezvous systems, thermal imaging systems, altimetry and flight control systems, target locating systems, optical systems, marine systems, ground control systems, vessel/vehicle traffic services, security systems, offboard communication systems, onboard communication systems, transit measuring systems, coordinate measuring systems, signal processing systems, phased array systems, broadcasting systems, electronic countermeasure systems, virtual systems, scanning systems, beamed signal systems, and/or other suitable types of assets.

In other illustrative examples, heterogeneous group of vehicles **300** may include marine vehicles, water vehicles, aquatic vehicles, and/or other suitable types of vehicles in addition to and/or in place of the ones shown. For example, a fire may occur at a platform located on the water. Heterogeneous group of vehicles **300** may include water vehicles **360** that are manned and/or unmanned. Water vehicles **360** may include, for example, ships, jet skis, boats, unmanned underwater vehicles, and/or other suitable types of water vehicles that may be used in detecting the fire, containing the fire, and/or monitoring the fire.

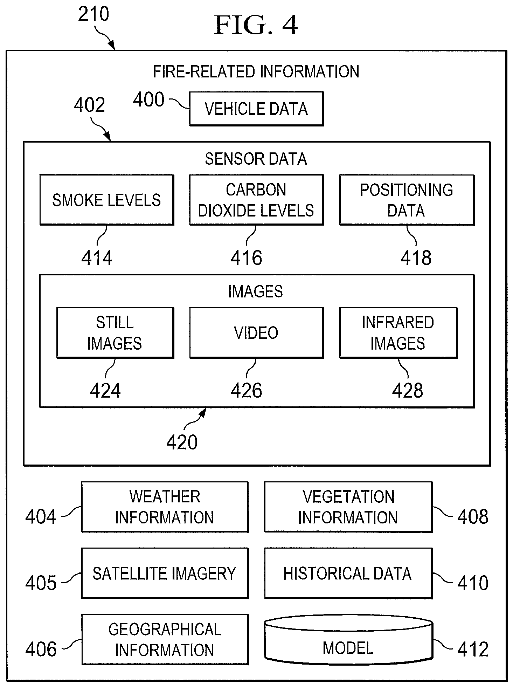

With reference now to **Figure 4****,** an illustration of different types of fire-related information is depicted in accordance with an advantageous embodiment. In this illustrative example, different types of fire-related information **210** from **Figure 2** are shown. As depicted, fire-related information **210** may include at least one of vehicle data **400,** sensor data **402,** weather information **404,** satellite imagery **405,** geographical information **406,** vegetation information **408,** historical data **410,** model **412,** and/or other suitable types of information.

Vehicle data **400** may include any information gathered by assets in the form of vehicles, such as heterogeneous group of vehicles **300** in **Figure 3****.** This data may include sensor data, images, audio generated by an operator of a vehicle, position information, and/or other suitable information.

Sensor data **402** may include, for example, without limitation, smoke levels **414,** carbon dioxide levels **416,** positioning data **418,** images **420,** and/or other suitable types of sensor data. Images **420** may include, for example, still images **424,** video **426,** infrared images **428,** and/or other suitable types of images.

Weather information **404** may include, for example, information obtained from weather-related sensors, historical weather information, predicted weather information, a current wind speed and wind direction, a predicted wind speed and direction, and/or other suitable types of weather information. Weather information **404** may include weather information **352** obtained from number of weather stations **308** in **Figure 3** and/or other weather information obtained from other suitable sources.

In this illustrative example, satellite imagery **405** may be obtained from any of a number of satellites. Geographical information **406,** vegetation information **408,** historical data **410,** model **412,** and/or other suitable types of information may be obtained from a number of different sources. For example, these types of information may be obtained from a repository, such as repository **221** in **Figure 2** and/or number of storage devices **310** in **Figure 3****.**

Geographical information **406** may include maps, topographical information, geographical landmarks, and/or other suitable information. Vegetation information **408** includes an identification of the different types of plant life and vegetation in areas of interest. Historical data **410** may be historical data about previous fires that have occurred. Model **412** may include information about the behavior of a fire that may be used for simulating a fire and/or other suitable information.

The illustration of fire-related information **210** in **Figure 4** is not meant to imply physical or architectural limitations to the manner in which an advantageous embodiment may be implemented. Other components in addition to and/or in place of the ones illustrated may be used. Some components may be unnecessary. Also, the blocks are presented to illustrate some functional components. One or more of these blocks may be combined and/or divided into different blocks when implemented in an advantageous embodiment.

For example, in other illustrative examples, fire-related information **210** may include asset condition and capability information and asset operational support information in addition to and/or in place of the types of information described above. For example, for an unmanned aerial vehicle, the vehicle would provide information related to its condition, such as fuel remaining and systems health. The unmanned aerial vehicle would also provide information related to its capabilities, such as sensor type and fire suppressant capacity.

Fire-related information **210** may also include information related to operational support, such as refueling locations, water source locations, and fire suppressant resupply locations. For human operated assets, the condition and capability information may include operator time on-duty and/or other information useful to coordinating the detection, containment, and monitoring of fires.

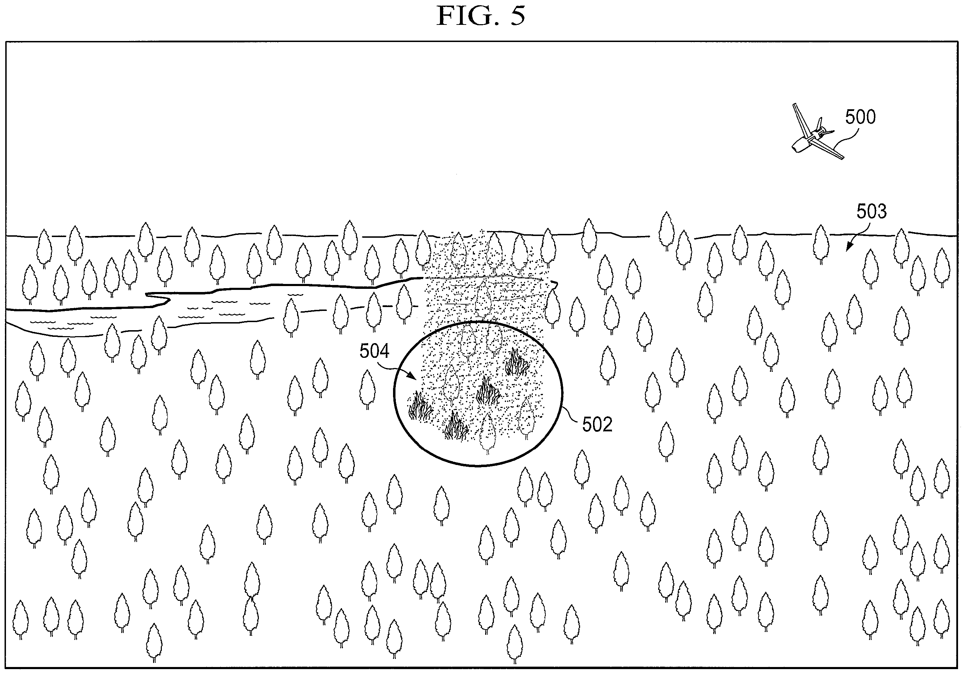

With reference now to **Figure 5****,** an illustration of an unmanned aerial vehicle flying towards a fire is depicted in accordance with an advantageous embodiment. In this illustrative example, unmanned aerial vehicle **500** is an example of one implementation for an asset in assets **206** in **Figures 2** and **3****.** In particular, unmanned aerial vehicle **500** is an example of one implementation for one of unmanned aerial vehicles **328** in **Figure 3****.**

As depicted, unmanned aerial vehicle **500** may be flying towards location **502** in forest **503.** Fire **504** is present in location **502.** Unmanned aerial vehicle **500** has detected the presence of fire **504** at location **502** and is flying towards fire **504** to obtain fire-related information about fire **504.** The coordinating of unmanned aerial vehicle **500** to fly towards fire **504** to obtain fire-related information about fire **504** in response to the detection of the presence of fire **504** may be performed by, for example, fire management module **204** in **Figure 2****.**

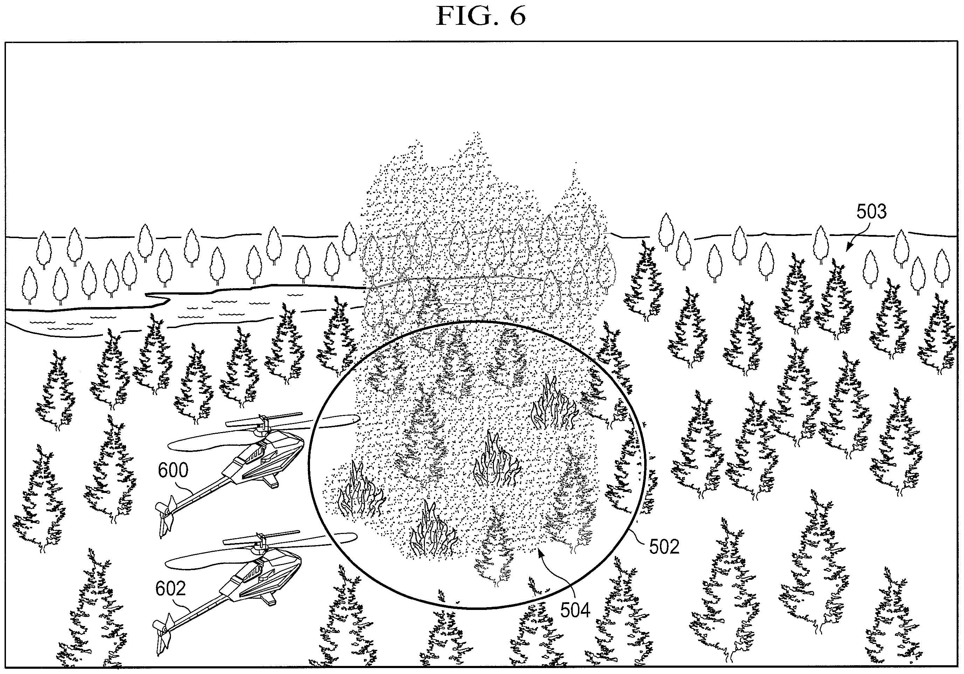

Turning now to **Figure 6****,** an illustration of unmanned aerial vehicles monitoring a fire in a forest is depicted in accordance with an advantageous embodiment. In this illustrative example, aerial monitoring unit **600** and aerial monitoring unit **602** are other examples of one implementation for one of unmanned aerial vehicles **328** in **Figure 3****.**

As depicted, fire management module **204** in **Figure 2** may coordinate aerial monitoring unit **600** and aerial monitoring unit **602** to monitor the status of fire **504** at location **502** in response to fire-related information collected about fire **504** by unmanned aerial vehicle **500** in **Figure 5****.** Aerial monitoring unit **600** and aerial monitoring unit **602** are coordinated by fire management module **204** to monitor the status of fire **504** just prior to, during, and/or after containment operations have been performed for fire **504.**

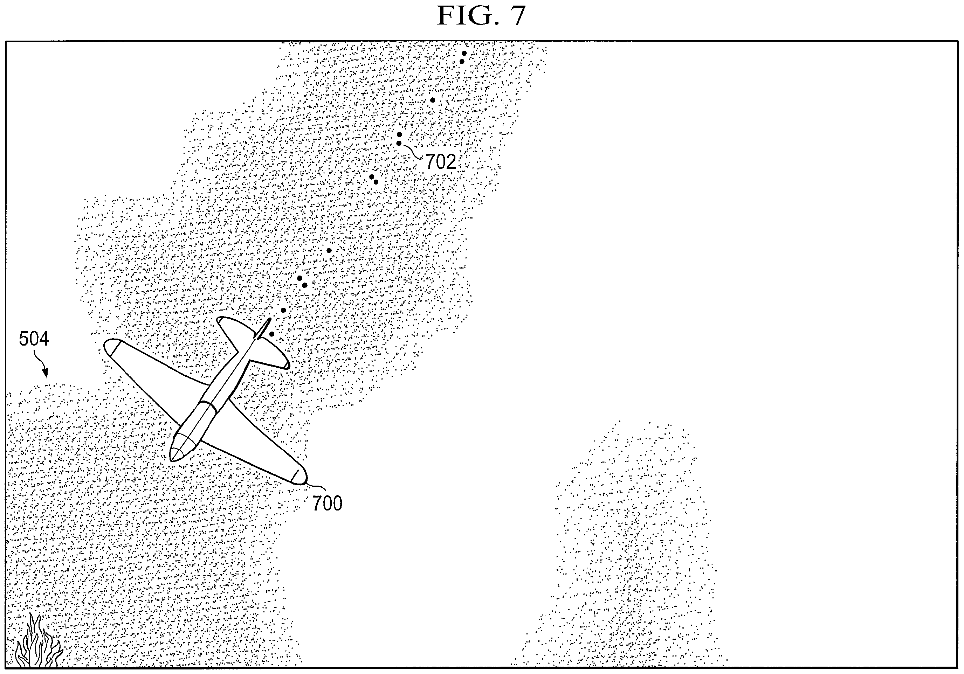

With reference now to **Figure 7****,** an illustration of a vehicle performing containment operations for a fire is depicted in accordance with an advantageous embodiment. In this illustrative example, aerial fire containment unit **700** is an example of one implementation for an asset in assets **206** in **Figures 2** and **3****.** In particular, aerial fire containment unit **700** is an example of one implementation for manned aerial vehicles **324** in **Figure 3****.**

As depicted, fire management module **204** in **Figure 2** coordinates aerial fire containment unit **700** to perform containment operations on fire **504.** In particular, an operator of aerial fire containment unit **700** is directed to drop water pods **702** on fire **504** to put out fire **504** and/or contain fire **504.** Water pods **702** may be objects that are configured to release water upon contact with the ground and/or when a selected temperature has been reached.

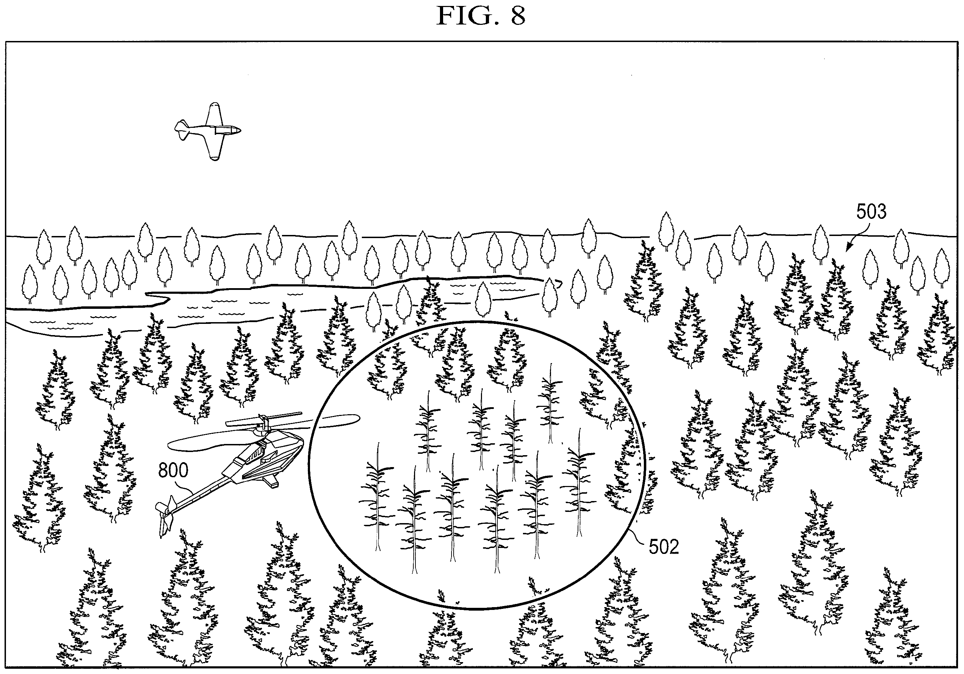

Turning now to **Figure 8****,** an illustration of an aerial vehicle monitoring unit monitoring a location at which a fire has been contained is depicted in accordance with an advantageous embodiment. In this illustrative example, aerial vehicle monitoring unit **800** is an example of one implementation for an asset in assets **206** in **Figures 2** and **3****.** In particular, aerial vehicle monitoring unit **800** is an example of one implementation for manned aerial vehicles **324** in **Figure 3****.**

As depicted, aerial vehicle monitoring unit **800** is directed by fire management module **204** in **Figure 2** to monitor location **502** at which fire **504** from **Figures 5-7** has been contained. More specifically, fire **504** has been put out at location **502.** Aerial vehicle monitoring unit **800** may be coordinated to monitor location **502** and/or the area surrounding location **502** for a period of time to ensure that the fire does not start up again and/or that another fire does not start.

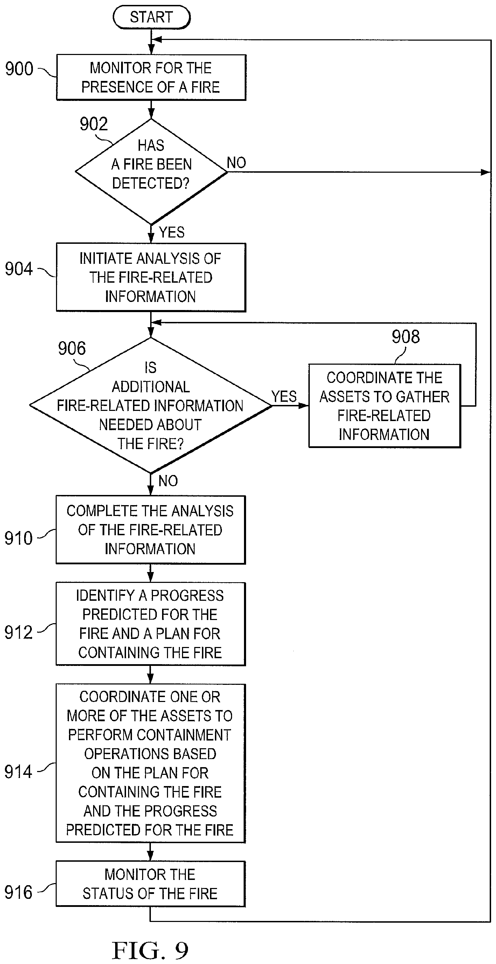

With reference now to **Figure 9****,** an illustration of a flowchart of a process for managing fires is depicted in accordance with an advantageous embodiment. The process illustrated in **Figure 9** may be implemented using fire management module **204** running in control system **200** in **Figure 2****.**

The process begins by monitoring for the presence of a fire (operation **900**). Operation **900** includes coordinating assets, such as assets **206,** using, for example, detection coordination **212** in **Figure 2****.** Further, operation **900** may include obtaining information, such as fire-related information **210,** by coordinating assets **206** using information gathering coordination **214** in **Figure 2****.**

Further, operation **900** includes receiving fire-related information from assets, such as, for example, a heterogeneous group of vehicles. A heterogeneous group of vehicles includes at least two vehicles that have a different configuration, different configurations, and/or are different in some other manner. In other words, the heterogeneous group of vehicles includes at least two vehicles that are dissimilar.

The process then determines whether a fire has been detected (operation **902**). In this illustrative example, operation **902** may be performed using fire-related information **210** provided by assets **206** in **Figure 2****.** In some cases, the determination may be made by one or more of assets **206** when a portion of fire management module **204** is running on one or more of assets **206.**

If a fire has not been detected, the process returns to operation **900** as described above. Otherwise, the process initiates analysis of the fire-related information (operation **904**). Thereafter, the process determines whether additional fire-related information is needed about the fire (operation **906**). If additional fire-related information is needed, the process coordinates the assets to gather fire-related information (operation **908**). For example, in operation **908,** one or more of the assets may be coordinated to monitor the fire and/or the location in which the fire occurs to obtain the necessary fire-related information. In some cases, additional information may be obtained from assets other than vehicles, such as a repository.

The process then returns to operation **906.** If additional fire-related information is not needed, the process completes the analysis of the fire-related information (operation **910**). Completion of the analysis may include, for example, without limitation, running a simulation using the fire-related information to predict a progress of the fire.

Next, the process identifies a progress predicted for the fire and a plan for containing the fire (operation **912**). The progress may include, for example, a predicted path of expansion for the fire, predicted smoke levels, and/or other suitable information about the fire. Further, operation **912** may include generating a result based on the analysis completed in operation **910.** The result may include the progress predicted for the fire, a map of a current location of a fire, and/or other suitable types of information that may be used for managing the fire.

Thereafter, the process coordinates one or more of the assets to perform containment operations based on the plan for containing the fire and the progress predicted for the fire (operation **914**). Further, operation **914** may also include coordinating one or more assets to direct the vehicles in a particular direction and/or direct the vehicles to perform other suitable operations. The process monitors the status of the fire (operation **916**), with the process then returning to operation **900** as described above.

In this illustrative example, operation **916** may be performed while operation **914** is being performed to contain the fire. Further, operation **916** may also be performed after operation **916** has been performed and the fire has been fully contained to monitor for a reoccurrence of the fire, smoke levels, carbon dioxide levels, and/or other factors.

The flowchart and block diagrams in the different depicted embodiments illustrate the architecture, functionality, and operation of some possible implementations of apparatus, methods, and computer program products. In this regard, each block in the flowchart or block diagrams may represent a module, segment, or portion of computer usable or readable program code, which comprises one or more executable instructions for implementing the specified function or functions. In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved.

For example, operation **914** and operation **916** in **Figure 9** may be performed at substantially the same time in some cases. In other illustrative examples, operation **908** may be performed while all of the other operations in **Figure 9** are being performed. In still other illustrative examples, after operation **916** is performed, the process may terminate or wait for user input instead of returning to operation **900** in **Figure 9****.**

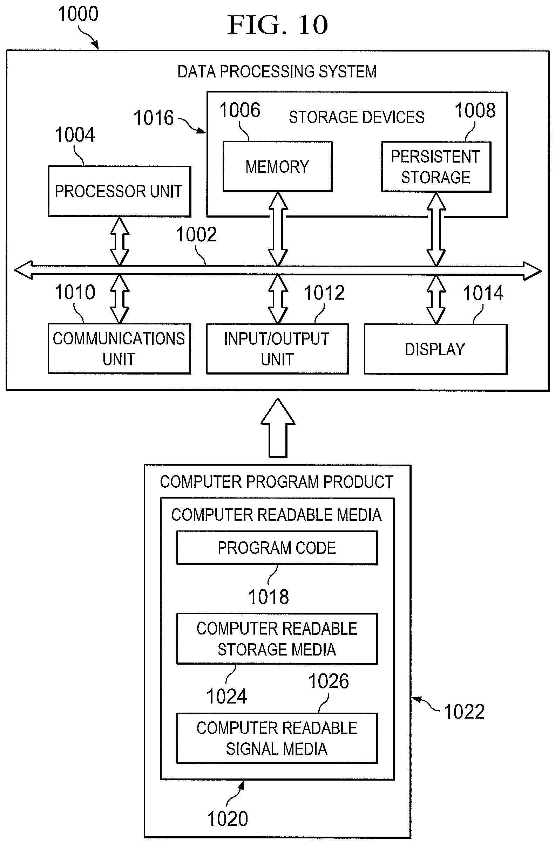

Turning now to **Figure 10****,** an illustration of a data processing system is depicted in accordance with an advantageous embodiment. In this illustrative example, data processing system **1000** may be used in implementing one or more of number of computers **202** for control system **200** in **Figure 2****.** As depicted, data processing system **1000** includes communications fabric **1002,** which provides communications between processor unit **1004,** memory **1006,** persistent storage **1008,** communications unit **1010,** input/output (I/O) unit **1012,** and display **1014.**

Processor unit **1004** serves to execute instructions for software that may be loaded into memory **1006.** Processor unit **1004** may be a number of processors, a multi-processor core, or some other type of processor, depending on the particular implementation. A number, as used herein with reference to an item, means one or more items. Further, processor unit **1004** may be implemented using a number of heterogeneous processor systems in which a main processor is present with secondary processors on a single chip. As another illustrative example, processor unit **1004** may be a symmetric multi-processor system containing multiple processors of the same type.

Memory **1006** and persistent storage **1008** are examples of storage devices **1016.** A storage device is any piece of hardware that is capable of storing information, such as, for example, without limitation, data, program code in functional form, and/or other suitable information either on a temporary basis and/or a permanent basis. Storage devices **1016** may also be referred to as computer readable storage devices in these examples. Memory **1006,** in these examples, may be, for example, a random access memory or any other suitable volatile or non-volatile storage device. Persistent storage **1008** may take various forms, depending on the particular implementation.

For example, persistent storage **1008** may contain one or more components or devices. For example, persistent storage **1008** may be a hard drive, a flash memory, a rewritable optical disk, a rewritable magnetic tape, or some combination of the above. The media used by persistent storage **1008** also may be removable. For example, a removable hard drive may be used for persistent storage **1008.**

Communications unit **1010,** in these examples, provides for communications with other data processing systems or devices. In these examples, communications unit **1010** is a network interface card. Communications unit **1010** may provide communications through the use of either or both physical and wireless communications links.

Input/output unit **1012** allows for input and output of data with other devices that may be connected to data processing system **1000.** For example, input/output unit **1012** may provide a connection for user input through a keyboard, a mouse, and/or some other suitable input device. Further, input/output unit **1012** may send output to a printer. Display **1014** provides a mechanism to display information to a user.

Instructions for the operating system, applications, and/or programs may be located in storage devices **1016,** which are in communication with processor unit **1004** through communications fabric **1002.** In these illustrative examples, the instructions are in a functional form on persistent storage **1008.** These instructions may be loaded into memory **1006** for execution by processor unit **1004.** The processes of the different embodiments may be performed by processor unit **1004** using computer-implemented instructions, which may be located in a memory, such as memory **1006.**

These instructions are referred to as program code, computer usable program code, or computer readable program code that may be read and executed by a processor in processor unit **1004.** The program code in the different embodiments may be embodied on different physical or computer readable storage media, such as memory **1006** or persistent storage **1008.**

Program code **1018** is located in a functional form on computer readable media **1020** that is selectively removable and may be loaded onto or transferred to data processing system **1000** for execution by processor unit **1004.** Program code **1018** and computer readable media **1020** form computer program product **1022** in these examples. In one example, computer readable media **1020** may be computer readable storage media **1024** or computer readable signal media **1026.**

Computer readable storage media **1024** may include, for example, an optical or magnetic disk that is inserted or placed into a drive or other device that is part of persistent storage **1008** for transfer onto a storage device, such as a hard drive, that is part of persistent storage **1008.** Computer readable storage media **1024** also may take the form of a persistent storage, such as a hard drive, a thumb drive, or a flash memory, that is connected to data processing system **1000.** In some instances, computer readable storage media **1024** may not be removable from data processing system **1000.**

In these examples, computer readable storage media **1024** is a physical or tangible storage device used to store program code **1018,** rather than a medium that propagates or transmits program code **1018.** Computer readable storage media **1024** is also referred to as a computer readable tangible storage device or a computer readable physical storage device. In other words, computer readable storage media **1024** is a media that can be touched by a person.

Alternatively, program code **1018** may be transferred to data processing system **1000** using computer readable signal media **1026.** Computer readable signal media **1026** may be, for example, a propagated data signal containing program code **1018.** For example, computer readable signal media **1026** may be an electromagnetic signal, an optical signal, and/or any other suitable type of signal. These signals may be transmitted over communications links, such as wireless communications links, optical fiber cable, coaxial cable, a wire, and/or any other suitable type of communications link. In other words, the communications link and/or the connection may be physical or wireless in the illustrative examples.

In some advantageous embodiments, program code **1018** may be downloaded over a network to persistent storage **1008** from another device or data processing system through computer readable signal media **1026** for use within data processing system **1000.** For instance, program code stored in a computer readable storage medium in a server data processing system may be downloaded over a network from the server to data processing system **1000.** The data processing system providing program code **1018** may be a server computer, a client computer, or some other device capable of storing and transmitting program code **1018.**

The different components illustrated for data processing system **1000** are not meant to provide architectural limitations to the manner in which different embodiments may be implemented. The different advantageous embodiments may be implemented in a data processing system including components in addition to or in place of those illustrated for data processing system **1000.** Other components shown in **Figure 10** can be varied from the illustrative examples shown. The different embodiments may be implemented using any hardware device or system capable of running program code. As one example, the data processing system may include organic components integrated with inorganic components and/or may be comprised entirely of organic components excluding a human being. For example, a storage device may be comprised of an organic semiconductor.

In another illustrative example, processor unit **1004** may take the form of a hardware unit that has circuits that are manufactured or configured for a particular use. This type of hardware may perform operations without needing program code to be loaded into a memory from a storage device to be configured to perform the operations.

For example, when processor unit **1004** takes the form of a hardware unit, processor unit **1004** may be a circuit system, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, a programmable array logic, a field programmable logic array, a field programmable gate array, and other suitable hardware devices. With this type of implementation, program code **1018** may be omitted because the processes for the different embodiments are implemented in a hardware unit.

In still another illustrative example, processor unit **1004** may be implemented using a combination of processors found in computers and hardware units. Processor unit **1004** may have a number of hardware units and a number of processors that are configured to run program code **1018.** With this depicted example, some of the processes may be implemented in the number of hardware units, while other processes may be implemented in the number of processors.

In another example, a bus system may be used to implement communications fabric **1002** and may be comprised of one or more buses, such as a system bus or an input/output bus. Of course, the bus system may be implemented using any suitable type of architecture that provides for a transfer of data between different components or devices attached to the bus system.

Additionally, a communications unit may include a number of devices that transmit data, receive data, or transmit and receive data. A communications unit may be, for example, a modem or a network adapter, two network adapters, or some combination thereof. Further, a memory may be, for example, memory **1006,** or a cache, such as found in an interface and memory controller hub that may be present in communications fabric **1002.**

Thus, the different advantageous embodiments provide a fire management system that may be used to detect fires, contain fires, or perform a combination of the two. In an advantageous embodiment, a control system is configured to receive fire-related information from a plurality of different types of vehicles. The control system is configured to analyze the fire-related information to generate a result and coordinate an operation of the plurality of different types of vehicles using the result.

In this manner, the different advantageous embodiments provide a system for managing fires that integrates information from many different types of assets and coordinates operations performed by these different types of assets to manage fires.

The description of the different advantageous embodiments has been presented for purposes of illustration and description and is not intended to be exhaustive or limited to the embodiments in the form disclosed. Many modifications and variations will be apparent to those of ordinary skill in the art. Further, different advantageous embodiments may provide different advantages as compared to other advantageous embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A fire management system (118) comprising:
a control system (200) configured to receive fire-related information (210) from at least a portion (332) of a heterogeneous group of vehicles (300) and a heterogeneous group of data sources (313), analyze the fire-related information (210) to generate a result (222), and coordinate, as a swarm, an operation of the heterogeneous group of vehicles (300) using the result (222) to perform a number of common tasks or operations and/or achieve a common goal, wherein the heterogeneous group of data sources include autonomous sensor units, wherein coordinating as a swarm comprises a fire management module (204) running on the control system (200) sending commands to each of the vehicles within the swarm, wherein operating as a swarm comprises the heterogeneous group of vehicles having a collective behavior with respect to each other and an environment around the swarm of vehicles; and
wherein the fire management module (204) in the control system (200) is configured to run a simulation (224) to generate the result (222) in a form of a progress (226) predicted for a fire and wherein in being configured to coordinate the operation of the heterogeneous group of vehicles (300) using the result (222), the control system (200) is configured to send directions to coordinate movement of the swarm based on the progress (226) predicted for the fire, including ordering a change of a current direction of travel for the swarm to a new direction along a new path predicted for the fire.

2. The fire management system (118) of claim 1, wherein in being configured to coordinate the operation of the portion of the heterogeneous group of vehicles (300) using the result (222), the control system (200) is configured to coordinate the operation of the portion heterogeneous group of vehicles (300) to perform at least one of monitoring for a fire, gathering information about the fire, performing containment operations on the fire, and supporting personnel at a location in which the fire is located.

3. The fire management system (118) of claim 1, wherein the control system (200) is configured to run a simulation (224) to detect a potential fire condition using the fire-related information (210), and wherein the autonomous sensor units include autonomous smart data origination components (ASDOC), aeronautical source collection and service system (ASCASS), and four dimensional time-variant multi-modal information system (4DTMIS).

4. The fire management system (118) of claim 1, wherein the progress predicted for the fire includes a predicted path for the fire, a predicted expansion or spread of the fire, a predicted amount of smoke generated by the fire, and a predicted level of toxic fumes generated by the fire.

5. The fire management system (118) of claim 1, wherein the control system (200) is configured to analyze the fire-related information (210) to identify an undesired condition resulting from a fire for an operator at a location and direct a plurality of different types of vehicles to obtain information about the fire at the location relating to at least one of safety of the operator and containment of the fire.

6. The fire management system (118) of claim 1, wherein the control system (200) sends tasks to the heterogeneous group of vehicles (300) to coordinate the operation of the heterogeneous group of vehicles (300).

7. The fire management system (118) of claim 1, wherein the control system (200) comprises a number of computers (202) located in at least one of a ground station and at least a portion (332) of the heterogeneous group of vehicles (300).

8. The fire management system (118) of claim 1, wherein the control system (200) is further configured to receive a portion of the fire-related information (210) from at least one of a satellite system, a sensor system, and a person.

9. The fire management system (118) of claim 1, wherein the result (222) is an identification of a number of locations (220) having a potential for a fire and wherein the control system (200) is configured to coordinate the operation of the heterogeneous group of vehicles (300) to monitor the number of locations (220) using the result (222); and wherein the result further comprises one of an identification of areas that need a warning about the fire and an identification of an area for evacuation.

10. The fire management system (118) of claim 1, wherein the result (222) is an identification of a number of locations (220) with a fire and wherein the control system (200) is configured to coordinate the operation of the heterogeneous group of vehicles (300) to obtain additional information about the fire at the number of locations (220).

11. The fire management system (118) of claim 10, wherein the heterogeneous group of vehicles (300) comprises types of vehicles selected from at least two of a manned vehicle (320) and an unmanned vehicle (322).

12. A method for managing fires, the method comprising:
receiving fire-related information (210) from a heterogeneous group of vehicles (300) and a heterogeneous group of data sources (313), wherein the heterogeneous group of data sources include autonomous sensor units, wherein the autonomous sensor units include autonomous smart data origination components (ASDOC), aeronautical source collection and service system (ASCASS), and four dimensional time-variant multi-modal information system (4DTMIS);
analyzing the fire-related information (210) to generate a result (222);
coordinating, as a swarm, an operation of the heterogeneous group of vehicles (300) using the result (222) to perform a number of common tasks or operations and/or achieve a common goal, wherein coordinating as a swarm comprises sending commands to each of the vehicles within the swarm, wherein operating as a swarm comprises the heterogeneous group of vehicles having a collective behavior with respect to each other and an environment around the swarm of vehicles; and
running a simulation (224) to generate the result (222) in a form of a progress (226) predicted for a fire; and sending directions to coordinate movement of the swarm based on the progress (226) predicted for the fire, including ordering a change of a current direction of travel for the swarm to a new direction along a new path predicted for the fire.

13. The method of claim 12, wherein the step of coordinating the operation of the heterogeneous group of vehicles (300) using the result (222) comprises:
coordinating the operation of the heterogeneous group of vehicles (300) to perform at least one of monitoring for a fire, gathering information about the fire, and performing containment operations on the fire; and
supporting personnel at a location in which the fire is located.

14. The method of claim 12, wherein the progress predicted for the fire includes a predicted path for the fire, a predicted expansion or spread of the fire, a predicted amount of smoke generated by the fire, and a predicted level of toxic fumes generated by the fire.

15. The method of claim 12 further comprising:
analyzing the fire-related information (210) to identify an undesired condition resulting from a fire for an operator at a location; and
directing a plurality of different types of vehicles to obtain information about a fire at the location relating to at least one of safety of the operator and containment of the fire.

## Patentansprüche

1. Feuermanagementsystem (118), das Folgendes aufweist:
ein Steuersystem (200), das konfiguriert ist, um feuerbezogene Informationen (210) von mindestens einem Teil (332) einer heterogenen Gruppe von Fahrzeugen (300) und einer heterogenen Gruppe von Datenquellen (313) zu empfangen, die feuerbezogenen Informationen (210) zu analysieren, um ein Ergebnis (222) zu erzeugen, und als Schwarm eine Operation der heterogenen Gruppe von Fahrzeugen (300) unter Verwendung des Ergebnisses (222) zu koordinieren, um eine Anzahl von gemeinsamen Aufgaben oder Operationen durchzuführen und/oder ein gemeinsames Ziel zu erreichen, wobei die heterogene Gruppe von Datenquellen autonome Sensoreinheiten enthält, wobei das Koordinieren als Schwarm ein Feuermanagementmodul (204) aufweist, das auf dem Steuersystem (200) ausgeführt wird, und Befehle an jedes der Fahrzeuge innerhalb des Schwarms sendet, wobei das Betreiben als Schwarm die heterogene Gruppe von Fahrzeugen mit einem kollektiven Verhalten in Bezug zueinander und einer Umgebung um den Schwarm von Fahrzeugen aufweist; und
wobei das Feuermanagementmodul (204) in dem Steuersystem (200) konfiguriert ist, um eine Simulation (224) auszuführen, um das Ergebnis (222) in Form eines Verlaufs (226) zu erzeugen, der für ein Feuer vorhergesagt wird, und wobei das Steuersystem (200) dadurch, dass es konfiguriert ist, die Operation der heterogenen Gruppe von Fahrzeugen (300) unter Verwendung des Ergebnisses (222) zu koordinieren, zum Senden von Anweisungen konfiguriert ist, um eine Bewegung des Schwarms auf Grundlage des Verlaufs (226), der für das Feuer vorhergesagt wird, zu koordinieren, einschließlich des Anordnens einer Änderung einer aktuellen Fortbewegungsrichtung für den Schwarm in eine neue Richtung entlang eines neuen Wegs, der für das Feuer vorhergesagt wird.

2. Feuermanagementsystem (118) nach Anspruch 1, wobei das Steuersystem (200) dadurch, dass es konfiguriert ist, die Operation des Teils der heterogenen Gruppe von Fahrzeugen (300) unter Verwendung des Ergebnisses (222) zu koordinieren, zum Koordinieren der Operation des Teils der heterogenen Gruppe von Fahrzeugen (300) konfiguriert ist, um mindestens eines von Überwachen eines Feuers, Sammeln von Informationen über das Feuer, Durchführen von Eindämmungsoperationen des Feuers und Unterstützen von Personal an einem Ort, an dem sich das Feuer befindet, durchzuführen.

3. Feuermanagementsystem (118) nach Anspruch 1, wobei das Steuersystem (200) konfiguriert ist, eine Simulation (224) auszuführen, um einen potenziellen Feuerzustand unter Verwendung der feuerbezogenen Informationen (210) zu erfassen, und wobei die autonomen Sensoreinheiten autonome intelligente Datenursprungskomponenten (ASDOC, engl. autonomous smart data origination components), ein aeronautisches Quellensammlungs- und Servicesystem (ASCASS, engl. aeronautical source collection and service system) und ein vierdimensionales zeitvariantes multimodales Informationssystem (4DTMIS, engl. four dimensional time-variant multi-modal information system) enthalten.

4. Feuermanagementsystem (118) nach Anspruch 1, wobei der für das Feuer vorhergesagte Verlauf einen vorhergesagten Weg für das Feuer, eine vorhergesagte Ausdehnung oder Ausbreitung des Feuers, eine vorhergesagte Rauchmenge, die durch das Feuer erzeugt wird, und einer vorhergesagten Konzentration an toxischen Dämpfen, die durch das Feuer erzeugt werden, enthält.

5. Feuermanagementsystem (118) nach Anspruch 1, wobei das Steuersystem (200) zum Analysieren der feuerbezogenen Informationen (210) konfiguriert ist, um einen unerwünschten Zustand zu identifizieren, der sich aus einem Feuer für einen Bediener an einem Ort ergibt, und um mehrere verschiedenen Arten von Fahrzeugen zu leiten, um Informationen über das Feuer an dem Ort zu erhalten, die sich mindestens auf eines von der Sicherheit des Bedieners und/oder die Eindämmung des Feuers beziehen.

6. Feuermanagementsystem (118) nach Anspruch 1, wobei das Steuersystem (200) Aufgaben an die heterogene Gruppe von Fahrzeugen (300) sendet, um die Operation der heterogenen Gruppe von Fahrzeugen (300) zu koordinieren.

7. Feuermanagementsystem (118) nach Anspruch 1, wobei das Steuersystem (200) eine Anzahl von Computern (202) aufweist, die sich in mindestens einem von einer Bodenstation und mindestens einem Teil (332) der heterogenen Gruppe von Fahrzeugen (300) befinden.

8. Feuermanagementsystem (118) nach Anspruch 1, wobei das Steuersystem (200) ferner konfiguriert ist, einen Teil der feuerbezogenen Informationen (210) von einem Satellitensystem, einem Sensorsystem und/oder einer Person zu empfangen.

9. Feuermanagementsystem (118) nach Anspruch 1, wobei das Ergebnis (222) eine Identifikation einer Anzahl von Orten (220) ist, die ein Potenzial für ein Feuer haben, und wobei das Steuersystem (200) zum Koordinieren der Operation der heterogenen Gruppe von Fahrzeugen (300) konfiguriert ist, um die Anzahl von Orten (220) unter Verwendung des Ergebnisses (222) zu überwachen; und wobei das Ergebnis ferner eine von einer Identifikation von Bereichen, die eine Warnung bezüglich des Feuers benötigen, und einer Identifikation eines Bereichs für die Evakuierung aufweist.

10. Feuermanagementsystem (118) nach Anspruch 1, wobei das Ergebnis (222) eine Identifikation einer Anzahl von Orten (220) mit einem Feuer ist und wobei das Steuersystem (200) zum Koordinieren der Operation der heterogenen Gruppe von Fahrzeugen (300) konfiguriert ist, um zusätzliche Informationen über das Feuer an der Anzahl von Orten (220) zu erhalten.

11. Feuermanagementsystem (118) nach Anspruch 10, wobei die heterogene Gruppe von Fahrzeugen (300) Fahrzeugtypen aufweist, die aus mindestens zwei von einem bemannten Fahrzeug (320) und einem unbemannten Fahrzeug (322) ausgewählt sind.

12. Verfahren zum Verwalten von Feuern, wobei das Verfahren Folgendes aufweist: Empfangen von feuerbezogenen Informationen (210) von einer heterogenen Gruppe von Fahrzeugen (300) und einer heterogenen Gruppe von Datenquellen (313), wobei die heterogene Gruppe von Datenquellen autonome Sensoreinheiten enthält, wobei die autonomen Sensoreinheiten autonome intelligente Datenursprungskomponenten (ASDOC), ein aeronautisches Quellensammlungs- und Servicesystem (ASCASS) und ein vierdimensionales zeitvariantes multimodales Informationssystem (4DTMIS) enthalten;
Analysieren der feuerbezogenen Informationen (210), um ein Ergebnis (222) zu erzeugen;
Koordinieren als Schwarm einer Operation der heterogenen Gruppe von Fahrzeugen (300) unter Verwendung des Ergebnisses (222), um eine Anzahl von gemeinsamen Aufgaben oder Operationen durchzuführen und/oder ein gemeinsames Ziel zu erreichen, wobei das Koordinieren als Schwarm das Senden von Befehlen an jedes der Fahrzeuge innerhalb des Schwarms aufweist, wobei das Betreiben als Schwarm die heterogene Gruppe von Fahrzeugen mit einem kollektiven Verhalten in Bezug zueinander und zu einer Umgebung um den Schwarm von Fahrzeugen herum aufweist; und
Ausführen einer Simulation (224), um das Ergebnis (222) in Form eines Verlaufs (226) zu erzeugen, der für ein Feuer vorhergesagt wird; und Senden von Anweisungen, um die Bewegung des Schwarms auf Grundlage des Verlaufs (226), der für das Feuer vorhergesagt wird, zu koordinieren, einschließlich des Anordnens einer Änderung einer aktuellen Fortbewegungsrichtung für den Schwarm in eine neue Richtung entlang eines neuen Wegs, der für das Feuer vorhergesagt wird.

13. Verfahren nach Anspruch 12, wobei der Schritt des Koordinierens der Operation der heterogenen Gruppe von Fahrzeugen (300) unter Verwendung des Ergebnisses (222) Folgendes aufweist:
Koordinieren der Operation der heterogenen Gruppe von Fahrzeugen (300), um mindestens eines von Überwachen eines Feuers, Sammeln von Informationen über das Feuer und Durchführen von Eindämmungsoperation bezüglich des Feuers durchzuführen; und
Unterstützen des Personals an einem Ort, an dem sich das Feuer befindet.

14. Verfahren nach Anspruch 12, wobei der für das Feuer vorhergesagte Verlauf einen vorhergesagten Weg für das Feuer, eine vorhergesagte Ausdehnung oder Ausbreitung des Feuers, eine vorhergesagte Rauchmenge, die durch das Feuer erzeugt wird, und einer vorhergesagten Konzentration an toxischen Dämpfen, die durch das Feuer erzeugt werden, enthält.

15. Verfahren nach Anspruch 12, welches ferner Folgendes aufweist:
Analysieren der feuerbezogenen Informationen (210), um einen unerwünschten Zustand zu identifizieren, der sich aus einem Feuer für einen Bediener an einem Ort ergibt; und
Leiten mehrerer verschiedener Fahrzeugtypen, um Informationen über ein Feuer an dem Ort zu erhalten, die sich mindestens auf die Sicherheit des Bedieners und die Eindämmung des Feuers beziehen.

## Revendications

1. Système de gestion des incendies (118) comprenant :
un système de contrôle (200) conçu pour recevoir des informations concernant le feu (210) d'au moins une partie (332) d'un groupe hétérogène de véhicules (300) et d'un groupe hétérogène de sources de données (313), analyser les informations concernant le feu (210) pour générer un résultat (222) et coordonner en essaim un fonctionnement du groupe hétérogène de véhicules (300) en utilisant le résultat (222) pour effectuer un certain nombre de tâches ou d'opérations communes et/ou réaliser un objectif commun,
dans lequel le groupe hétérogène de sources de données inclut des capteurs autonomes, où coordonner en essaim comprend qu'un module de gestion d'incendie (204) fonctionne sur le système de contrôle (200) en envoyant des commandes à chacun des véhicules dans l'essaim, coordonner en essaim comprenant que le groupe hétérogène de véhicules ait un comportement collectif les uns par rapport aux autres et à un environnement autour de l'essaim de véhicules ; et
dans lequel le module de gestion d'incendie (204) dans le système de contrôle (200) est conçu pour faire fonctionner une simulation (224) afin de générer le résultat (222) sous la forme d'une prédiction de progression (226) pour un incendie, et
dans lequel, en étant conçu pour coordonner le fonctionnement du groupe hétérogène de véhicules (300) en utilisant le résultat (222), le système de contrôle (200) est configuré pour envoyer des instructions pour coordonner le mouvement de l'essaim en fonction de la progression (226) prédite pour l'incendie, y compris en ordonnant un changement de la direction actuelle de déplacement pour l'essaim vers une nouvelle direction le long d'un nouveau chemin prédit pour l'incendie.

2. Système de gestion des incendies (118) selon la revendication 1 dans lequel, en étant conçu pour coordonner le fonctionnement du groupe hétérogène de véhicules (300) en utilisant le résultat (222), le système de contrôle (200) est configuré pour coordonner le fonctionnement de la partie du groupe hétérogène de véhicules (300) pour effectuer une action parmi le contrôle d'un incendie, la collecte d'informations à propos de l'incendie, la réalisation d'opérations de confinement sur l'incendie et l'assistance au personnel sur un site où l'incendie est situé.

3. Système de gestion des incendies (118) selon la revendication 1 dans lequel le système de contrôle (200) est configuré pour faire fonctionner une simulation (224) afin de détecter un risque d'incendie en utilisant les informations concernant le feu (210), et dans lequel les capteurs autonomes incluent des composants de production de données intelligentes (ASDOC), un système de collecte et de service de source aéronautique (ASCASS) et un système d'informations multimodales quadridimensionnelles variables dans le temps (4DTMIS) .

4. Système de gestion des incendies (118) selon la revendication 1 dans lequel la progression prédite pour l'incendie inclut une prédiction de chemin pour l'incendie, une prédiction d'expansion ou de diffusion de l'incendie, une prédiction de quantité de fumée générée par l'incendie et une prédiction de niveau d'émanations toxiques générées par l'incendie.

5. Système de gestion des incendies (118) selon la revendication 1 dans lequel le système de contrôle (200) est configuré pour analyser les informations concernant le feu (210) afin d'identifier l'état indésirable résultant d'un incendie pour un opérateur à un emplacement et diriger plusieurs différents types de véhicules afin d'obtenir des informations à propos de l'incendie à l'emplacement concernant au moins un terme parmi la sécurité de l'opérateur et le confinement du feu.

6. Système de gestion des incendies (118) selon la revendication 1 dans lequel le système de contrôle (200) envoie des tâches au groupe hétérogène de véhicules (300) pour coordonner le fonctionnement du groupe hétérogène de véhicules (300) .

7. Système de gestion des incendies (118) selon la revendication 1 dans lequel le système de contrôle (200) comprend un certain nombre d'ordinateurs (202) situé dans au moins un site parmi une station au sol et au moins une partie (332) du groupe hétérogène de véhicules (300).

8. Système de gestion des incendies (118) selon la revendication 1 dans lequel le système de contrôle (200) est, en outre, configuré pour recevoir une partie des informations concernant le feu (210) en provenance d'au moins un élément parmi un système de satellites, un système de capteurs et une personne.

9. Système de gestion des incendies (118) selon la revendication 1 dans lequel le résultat (222) est une identification d'un certain nombre d'emplacements (220) présentant un risque d'incendie, et dans lequel le système de contrôle (200) est configuré pour coordonner le fonctionnement du groupe hétérogène de véhicules (300) afin de contrôler le nombre d'emplacements (220) en utilisant le résultat (222) ; et dans lequel le résultat comprend, en outre, un élément parmi une identification de zones nécessitant une alerte d'incendie et une identification d'une zone d'évacuation.

10. Système de gestion des incendies (118) selon la revendication 1 dans lequel le résultat (222) est une identification d'un certain nombre d'emplacements (220) présentant un incendie, et dans lequel le système de contrôle (200) est configuré pour coordonner le fonctionnement du groupe hétérogène de véhicules (300) afin d'obtenir des informations supplémentaires à propos de l'incendie au niveau du nombre d'emplacements (220).

11. Système de gestion des incendies (118) selon la revendication 10 dans lequel le groupe hétérogène de véhicules (300) comprend des types de véhicules choisis parmi au moins deux entre un véhicule avec pilote (320) et un véhicule sans pilote (322).

12. Procédé de gestion des incendies, le procédé comprenant de :
recevoir des informations concernant le feu (210) d'un groupe hétérogène de véhicules (300) et d'un groupe hétérogène de sources de données (313), le groupe hétérogène de sources de données incluant des capteurs autonomes, les capteurs autonomes incluant des composants de production de données intelligentes (ASDOC), un système de collecte et de service de source aéronautique (ASCASS) et un système d'informations multimodales quadridimensionnelles variables dans le temps (4DTMIS) ;
analyser les informations concernant le feu (210) pour générer un résultat (222) ;
coordonner en essaim un fonctionnement du groupe hétérogène de véhicules (300) en utilisant le résultat (222) pour effectuer un certain nombre de tâches ou d'opérations communes et/ou réaliser un objectif commun, où coordonner en essaim comprend d'envoyer des commandes à chacun des véhicules dans l'essaim, et où coordonner en essaim comprend que le groupe hétérogène de véhicules ait un comportement collectif les uns par rapport aux autres et à un environnement autour de l'essaim de véhicules ; et
faire fonctionner une simulation (224) afin de générer le résultat (222) sous la forme d'une prédiction de progression (226) pour un incendie ; et
envoyer des instructions pour coordonner le mouvement de l'essaim en fonction de la progression (226) prédite pour l'incendie, y compris en ordonnant un changement de la direction actuelle de déplacement pour l'essaim vers une nouvelle direction le long d'un nouveau chemin prédit pour l'incendie.

13. Procédé selon la revendication 12, dans lequel l'étape de coordination du fonctionnement du groupe hétérogène de véhicules (300) en utilisant le résultat (222) comprend de :
coordonner le fonctionnement du groupe hétérogène de véhicules (300) pour effectuer une action parmi le contrôle d'un incendie, la collecte d'informations à propos de l'incendie, la réalisation d'opérations de confinement sur l'incendie et l'assistance au personnel sur un site où l'incendie est situé.

14. Procédé selon la revendication 12, dans lequel la progression prédite pour l'incendie inclut une prédiction de chemin pour l'incendie, une prédiction d'expansion ou de diffusion de l'incendie, une prédiction de quantité de fumée générée par l'incendie et une prédiction de niveau d'émanations toxiques générées par l'incendie.

15. Procédé selon la revendication 12, comprenant en outre de :
analyser les informations concernant le feu (210) pour identifier un état indésirable résultant d'un incendie pour un opérateur à un emplacement et diriger plusieurs différents types de véhicules afin d'obtenir des informations à propos de l'incendie à l'emplacement concernant au moins un terme parmi la sécurité de l'opérateur et le confinement du feu.
